## Europäisches Patentamt
## European Patent Office
## Office européen des brevets

(19)

(11) Numéro de publication : **0 457 396 B1**

(12) **FASCICULE DE BREVET EUROPEEN**

(45) Date de publication du fascicule du brevet :
**25.01.95 Bulletin 95/04**

(51) Int. Cl.⁶ : **G01S 15/89**, G01S 15/52

(21) Numéro de dépôt : **91201108.7**

(22) Date de dépôt : **08.05.91**

(54) **Dispositif éliminateur d'échos fixes pour échographe ultrasonore.**

(30) Priorité : **18.05.90 FR 9006255**

(43) Date de publication de la demande :
**21.11.91 Bulletin 91/47**

(45) Mention de la délivrance du brevet :
**25.01.95 Bulletin 95/04**

(84) Etats contractants désignés :
**DE FR GB**

(56) Documents cités :
**EP-A- 0 298 569**
**DE-A- 3 243 606**
**DE-A- 3 605 164**
**US-A- 4 688 044**

(73) Titulaire : **LABORATOIRES D'ELECTRONIQUE PHILIPS**
**22, Avenue Descartes**
**F-94450 Limeil-Brévannes (FR)**
(84) **FR**
Titulaire : **Philips Electronics N.V.**
**Groenewoudseweg 1**
**NL-5621 BA Eindhoven (NL)**
(84) **DE GB**

(72) Inventeur : **Bonnefous, Odile, Société Civile S.P.I.D.**
**156, Boulevard Haussmann**
**F-75008 Paris (FR)**

(74) Mandataire : **Pyronnet, Jacques et al**
**Société Civile S.P.I.D.**
**156, Boulevard Haussmann**
**F-75008 Paris (FR)**

## Description

La présente invention concerne un dispositif éliminateur d'échos fixes pour échographe ultrasonore à émission d'impulsions récurrentes muni d'un circuit d'intercorrélation et d'interpolation, en vue de la détermination de profils de vitesse de milieux en mouvement, comportant au moins un filtre éliminateur d'échos fixes du type passe-bande à lignes à retard.

Une application particulièrement avantageuse de ce dispositif consiste en la mesure de profils de vitesse d'écoulements sanguins par échographie ultrasonore.

Le problème technique général à résoudre par tout échographe ultrasonore destiné à la mesure et, complémentairement, à l'imagerie des vitesses d'écoulements sanguins est d'éliminer les échos fixes dus à la grande réflectivité des tissus biologiques (ici, les parois des vaisseaux) qui peut dépasser de 40 dB la réflectivité du sang (globules rouges). L'utilisation d'un dispositif d'élimination d'échos fixes est donc indispensable, avant toute estimation du profil de vitesse, pour réduire la dynamique des signaux à traiter et pour mesurer correctement les vitesses d'écoulement sur toute une section des vaisseaux, en particulier les faibles vitesses qui apparaissent au voisinage des parois de vaisseaux et qui sont, de ce fait, masquées par les forts signaux provenant de ces parois.

Une solution simple à ce problème technique général consiste par exemple, dans un dispositif éliminateur d'échos fixes pour échographe ultrasonore, à introduire un filtre, du type à lignes à retard, composé d'une ligne retardée d'une période de récurrence en parallèle sur une ligne de retard nul. Des coefficients de pondération, respectivement +1 et -1, sont affectés à ces lignes qui, après pondération, sont additionnées par un additionneur. Ce filtre connu réalise donc la différence entre deux lignes échographiques consécutives ce qui, par principe, conduit à une diminution quasi complète des échos produits par les tissus fixes. Toutefois, cette technique présente l'inconvénient majeur d'atténuer également les signaux correspondant aux faibles vitesses d'écoulement. A titre d'exemple, on peut montrer que la réponse du filtre ci-dessus en fonction de la vitesse d'écoulement est telle que, pour une fréquence de récurrence de $1/T = 5$ kHz, et une fréquence d'émission de $N_c = 5$ MHz, un signal correspondant à $V = 5$ cm/s est atténué de 30 dB.

Ceci rend difficile, voire impossible, la mesure des vitesses d'écoulement là où elles sont les plus faibles, c'est-à-dire près des parois des vaisseaux. Or, la connaissance de ces vitesses est très importante pour l'étude et le diagnostic clinique des artères, par exemple.

Il est connu, par ailleurs, que l'on peut augmenter la pente du filtre mentionné plus haut, dans la zone de coupure en augmentant son ordre. Appliqué à la mesure des vitesses par échographie, ceci revient à traiter non plus 2 lignes échographiques successives mais davantage, soit M, à l'aide d'un filtre du type à lignes à retard, composé de M lignes parallèles i de retard respectif (i-1)T. De façon à assurer l'élimination des échos fixes, les M lignes sont pondérées par des coefficients dont la somme est nulle. Puis toutes les lignes sont additionnées pour ensuite être traitées par un circuit estimateur de vitesse, par corrélation, décalage de phase, etc... Cependant, il est difficile avec ce type de filtre d'obtenir à la fois une bonne mesure du profil de vitesse de l'écoulement étudié et une cadence d'image élevée. Si N est le nombre de lignes à traiter (typiquement N = 16 pour les vaisseaux périphériques et N = 8 pour le coeur), et si M lignes sont utilisées pour le filtre d'élimination des échos fixe, il ne reste en réalité que N-M+1 lignes utilisables pour l'estimation de vitesse, ou alors, pour avoir le même nombre de lignes à traiter, il faudrait diminuer la cadence d'image.

On connaît aussi de la demande de brevet français 2 617 982 au nom de la demanderesse un dispositif éliminateur d'échos fixes pour échographe ultrasonore comportant, associés en parallèle, au moins deux filtres de même structure, conjugués et déphasés entre eux de (M-1)T, chaque filtre étant composé, d'une part, de M lignes parallèles i (i = 1, ..., M) de retard respectif (i-1)T, T étant la période de récurrence de l'échographe, d'autre part, de moyens de pondération des M lignes i, la somme des coefficients affectés auxdites lignes étant nulle, et, enfin, d'un additionneur des lignes i ainsi retardées et pondérées, dispositif gâce auquel on puisse obtenir une estimation satisfaisante des faibles vitesses d'écoulements sanguins, notamment à proximtié des parois des vaisseaux, sans diminution importante des lignes à traiter, donc sans réduction de la cadence d'image. On obtient ainsi deux filtres d'ordre M-1 ayant en module la même reponse en fréquence. On dispose alors en sortie de ces filtres de : 2(N-M+1) signaux pour estimer les vitesses au lieu de N-M+1. Ces signaux ne sont pas tout à fait indépendants, mais avec un estimateur de vitesse utilisant une opération non linéaire disposé en aval (corrélation 1 bit, décalage de phase,...), on obtient ainsi une amélioration appréciable. Cependant, une corrélation plus fine que la corrélation 1 bit atténuerait les effets de l'amélioration ainsi obtenue. Le problème technique précis que se propose de résoudre la présente invention consiste, tout en conservant un nombre élevé de lignes utilisables pour l'estimation de vitesse, à obtenir un filtrage, pour la réjection des échos fixes, qui soit correct pour les vitesses faibles à mesurer tout en restant proche de l'optimum pour les vitesses plus élevées.

Le but principal de l'invention est de réaliser un dispositif éliminateur d'échos fixes qui effectue un filtrage correct pour toute la plage de vitesses utiles à mesurer typiquement comprises entre 0 et 100 cm/s.

Ce but est atteint et les inconvénients de l'art antérieur sont atténués ou supprimés grâce au fait que le dispositif éliminateur d'échos fixes défini en préambule est remarquable en ce qu'il comporte une pluralité de filtres éliminateurs d'échos fixes du type précité en parallèle, dont les bandes passantes sont juxtaposées, des détecteurs d'amplitude reliés chacun à la sortie de chacun desdits filtres et à l'entrée d'un comparateur, des éléments de retard branchés entre la sortie de chaque filtre et un multiplexeur, ce dernier recevant un signal de commande issu dudit comparateur pour sélectionner en sortie dudit multiplexeur celui parmi les signaux de sortie desdits filtres qui présente la plus grande amplitude.

On obtient ainsi un multifiltrage, chaque filtre étant adapté à une gamme de vitesses particulière. Le choix consistant à sélectionner à travers le multiplexeur le filtre qui fournit les données ayant la plus grande amplitude se justifie par le fait qu'on cherche à obtenir une amplitude, pour le signal utile débarrassé des échos fixes, qui se situe nettement au-dessus du niveau de bruit, pour les vitesses faibles particulièrement. De plus, l'utilisation de plusieurs filtres dont les bandes passantes sont juxtaposées, permet de sélectionner un filtre dévolu aux vitesses les plus faibles dont la pente est forte, tout en conservant pour ce filtre (et aussi pour les autres filtres en parallèle) un ordre peu élevé. En ce qui concerne l'ordre n des filtres on observe expérimentalement qu'il n'est pas possible d'améliorer de façon significative le dispositif suppresseur d'échos fixes selon l'invention lorsqu'on utilise des filtres à 3 coefficients. Par ailleurs, les résultats obtenus avec des filtres à 5 coefficients sont à peu près semblables à ceux obtenus avec des filtres à 4 coefficients quoiqu'au prix d'une plus grande complexité et aussi, selon certains modes de réalisation basés sur le multifiltrage, au risque accru de discontinuités apparaissant dans les profils de vitesses mesurés, raison pour laquelle ces modes de réalisation, dans lesquels les fonctions de suppresssion d'échos fixes et d'intercorrélation sont totalement dissociées, ne sont pas retenus. De préférence, les filtres éliminateurs d'échos fixes selon l'invention sont des filtres à 4 coefficients, à somme des coefficients nulle, cette dernière caractéristique étant la condition première, connue, pour la suppression d'échos fixes, soit :

$$\sum_{k=0}^{n} a_k = 0 \qquad (1)$$

Selon un mode de réalisation préféré de l'invention, les filtres suppresseurs d'échos fixes sont conçus et sélectionnés pour rendre maximale la fonction $A(\emptyset)$ du rapport signal à bruit entre la sortie et l'entrée desdits filtres :

$$A(\emptyset) = \frac{\left| \sum_{k=0}^{n} a_k \, e^{-jk\emptyset} \right|}{\sqrt{\sum_{k=0}^{n} a_k^2}} \qquad (2)$$

avec :

$$\emptyset = 4\Pi N_c \, VT/C$$

où :

$N_c$ : fréquence du signal échographique pendant l'impulsion,

$V$ : vitesse du flux sanguin correspondant au filtre sélectionné,

$T$ : période de récurrence de l'impulsion de signal échographique,

$C$ : vitesse du son dans le milieu analysé,

la somme des carrés des coefficients étant normée :

$$\sum_{k=0}^{n} a_k^2 = K \qquad (3)$$

K étant une constante.

La recherche des filtres s'effectue de la façon suivante : pour chaque vitesse V fixée, on cherche à maximiser le rapport signal à bruit $A(\emptyset)$ en faisant varier les coefficients $(a_k)$ en respectant la condition (1). On choisit une dynamique sur les coefficients, c'est-à-dire un pas de variation régulier entre une valeur maximale (positive) et une valeur minimale (négative) de même valeur absolue que la précédente, et on considère toutes les combinaisons possibles des coefficients $a_k$ ($k \in [0,n]$) telles que les conditions (1) et (3) soient vérifiées. On retient ensuite pour chaque valeur de vitesse les combinaisons de coefficients qui donnent, pour $A(\emptyset)$, les valeurs les plus élevées. Ensuite, pour une plage de vitesses considérée, on retient, parmi les différentes combinaisons correspondant à autant de points de vitesse de la plage considérée, la combinaison qui est commune à ces différents points. Etant donné le petit nombre de coefficients des filtres requis (de préférence 4 comme indiqué ci-dessus), cette démarche permet de sélectionner un petit nombre de filtres (de l'ordre de 3 filtres) pour la plage de vitesses utiles.

Un mode de réalisation avantageux du dispositif selon l'invention est remarquable en ce qu'il comporte les 3 filtres éliminateurs d'échos fixes à quatre coefficients suivants :

- un filtre pour vitesses faibles : $a_0 = 2/\sqrt{10}$, $a_1 = 1/\sqrt{10}$, $a_2 = - 1/\sqrt{10}$, $a_3 = - 2/\sqrt{10}$,
- un filtre pour vitesses moyennes : $a_0 = 1/2$, $a_1 = -1/2$, $a_2 = -1/2$, $a_3 = 1/2$,
- un filtre pour vitesses élevées : $a_0 = 1/2$, $a_1 = -1/2$, $a_2 = 1/2$, $a_3 = -1/2$.

La description qui suit en regard des dessins annexés, le tout donné à titre d'exemple non limitatif, fera bien comprendre comment l'invention peut être réalisée.

La figure 1 est le schéma synoptique d'un échographe ultrasonore à émission d'impulsions du type profilomètre et comportant un dispositif éliminateur d'échos fixes selon l'invention.

La figure 2 est le schéma synoptique du dispositif éliminateur d'échos fixes selon l'invention, associé à un circuit d'intercorrélation et d'interpolation dit : dispositif de mesure des vitesses.

La figure 3 est un diagramme de temps permettant d'expliciter certaines fréquences de fonctionnement du dispositif de la figure 2.

Les figures 4a et 4b représentent des structures de filtres éliminateurs d'échos fixes selon l'invention.

La figure 5 est la courbe de réponse d'un filtre selon l'art antérieur et de trois filtres en parallèle selon l'invention.

La figure 6 représente des profils de vitesse obtenus pour et au voisinage de l'artère poplitée, en a selon l'art antérieur (filtre éliminateur d'écho fixe unique à trois coefficients), en b selon l'invention.

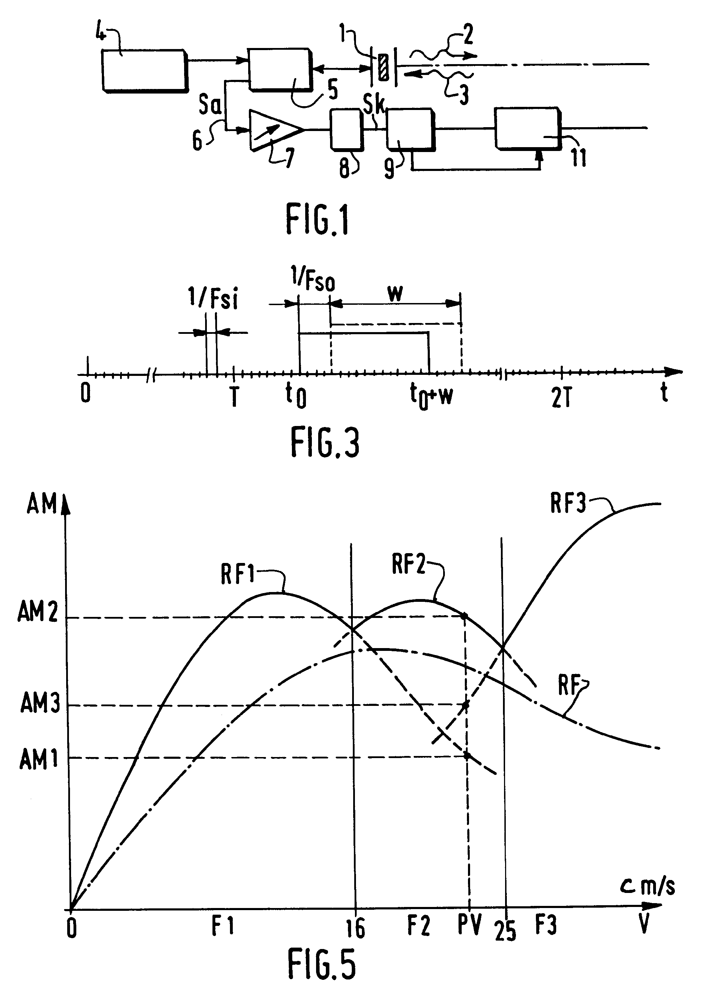

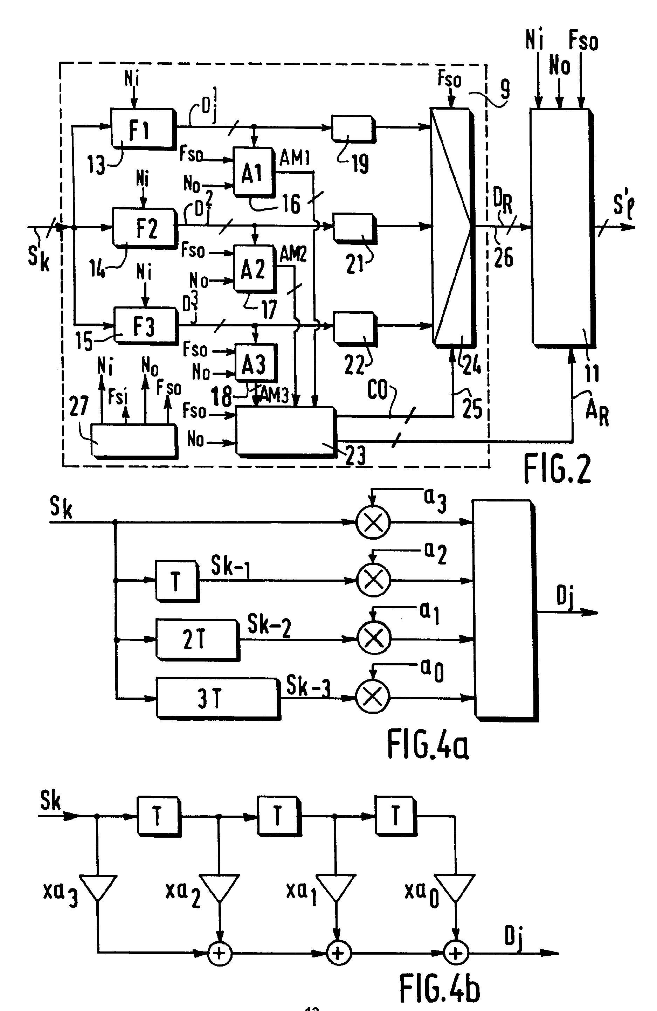

La figure 1 montre, sous forme schématique, un dispositif de mesure de la vitesse d'organes en mouvement et d'écoulement sanguins. Ce dispositif, appelé profilomètre, est fondé sur le principe d'une émission d'impulsions courtes (de l'ordre de 1 µs de largeur) selon une fréquence de récurrence de l'ordre de quelques kHz ($N_i = 1/T$, par exemple égale à 5 kHz). Le profilomètre fait généralement partie d'un appareil d'exploration par échographie ultrasonore plus complexe pouvant comporter en outre un système de visualisation bidimensionnelle des tissus et des flux sanguins analysés. Sur la figure 1 on a représenté un transducteur ultrasonore 1 qui émet (flèche 2), pendant chaque impulsion, une onde acoustique centrée autour d'une fréquence centrale $N_c$ de 5 MHz par exemple. Un signal d'écho à différentes profondeurs des tissus explorés est reçu pendant toute la durée T qui sépare deux impulsions consécutives. L'émetteur d'impulsions est représenté en 4. La référence 5 désigne un étage séparateur connu, qui permet d'utiliser le même transducteur 1 en émission et en réception. En sortie du séparateur 5 on obtient un signal analogique Sa sur un conducteur 6. Le signal Sa est traité par une chaîne de réception et de traitement constituée par un amplificateur à gain variable 7, un échantillonneur 8, un dispositif éliminateur d'échos fixes 9 et un dispositif de mesure des vitesses 11. La fonction de l'amplificateur à gain variable 7 est la suivante : l'amplitude des échos reçus décroît lorsque la distance des réflecteurs augmente, essentiellement à cause de l'absorption des ultrasons par les tissus traversés. Il est de ce fait nécessaire de compenser cette atténuation pour réduire autant que possible la dynamique du signal numérique appliqué à l'éliminateur d'échos fixes 9. Il faut que la loi des variations de gain de l'amplificateur 7 (de l'ordre de 1 dB/µs à 6 MHz) soit parfaitement reproductible, à mieux que 0,01 dB. Après échantillonnage à une fréquence Fsi par exemple égale à 20 MHz, en 8, ce qui correspond à un suréchantillonnage par deux environ, le signal se présente sous la forme d'échantillons $S_k(t)$ en entrée du Suppresseur d'échos fixes 9. L'ensemble constitué par les éléments 9 et 11, qui constitue le coeur de l'invention, est représenté plus en détail à la figure 2.

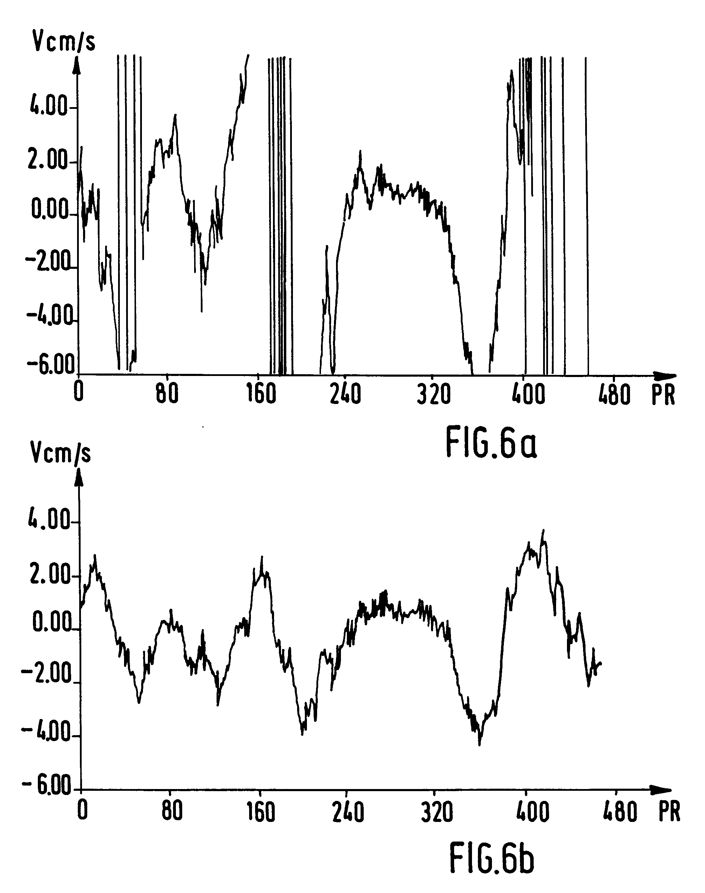

L'échantillon $S_k(t)$ est fourni à une pluralité de filtres F1, F2, F3, référencés 13, 14, 15 respectivement, chacun étant un filtre éliminateur d'échos fixes du type passe bande à lignes à retard comme décrit plus loin en référence aux figures 4a et 4b. Les bandes passantes des filtres F1, F2, F3 sont juxtaposées et l'on peut tracer la courbe de réponse de ces filtres en fonction des vitesses Doppler V à mesurer (voir figure 5), de façon telle que ces différentes courbes de réponse, homothétiques des courbes de réponse en fréquence, se recoupent dans la zone des vitesses faibles, environ comprise entre 10 et 30 cm/s. Le signal de sortie des filtres 13, 14, 15, est un signal échantillonné à la même fréquence Fsi que le signal d'entrée $S_k(t)$, noté $D^1j$, $D^2j$, $D^3j$ respectivement.

Les signaux $D^1j$, $D^2j$, $D^3j$ sont fournis chacun à un détecteur d'amplitude A1(16), A2(17), A3(18) respectivement et aussi à un élément de retard 19, 21, 22. La sortie de chaque détecteur d'amplitude est reliée à une entrée correspondante d'un comparateur 23 et la sortie de chaque élément de retard est reliée à une entrée correspondante d'un multiplexeur 24. Le comparateur 23 sélectionne en séquence l'amplitude la plus élevée parmi les signaux $D^1j$, $D^2j$, $D^3j$ et, au moyen d'un signal de commande CO sur un conducteur multiple 25, sélectionne, dans le multiplexeur 24, le signal Dj de plus grande amplitude qui est de ce fait fourni à la sortie 26 du multiplexeur 24, avec la notation $D_R$. Outre le signal de commande logique CO qui est élaboré en 23 par des circuits à seuil et des portes logiques dont le choix et l'agencement sont à la portée de l'homme de l'art, la valeur d'amplitude maximale fournie par l'un des détecteurs d'amplitude A1, A2, A3 est sélectionnée par le comparateur 23 et transmise, sous la forme du signal $A_R$ au dispositif de mesure 11 à des fins expliquées ci-dessous. Les éléments de retard 19, 21, 22 sont réalisés par exemple sous la forme de registres à décalage, fonctionnant à la fréquence d'échantillonnage d'entrée Fsi ; leur fonction est de retarder les signaux de sortie des filtres d'un temps au moins égal à l'estimation des amplitudes correspondantes, soit le temps nécessaire pour le traitement du signal à travers les détecteurs d'amplitude et le comparateur 23.

Pour mieux expliciter le fonctionnement du circuit électronique de la figure 2 on a représenté un générateur d'horloge 27 qui émet quatre signaux d'horloge représentés par leurs valeurs de fréquence : Ni, Fsi, No, Fso respectivement, ces signaux d'horloge étant utilisés de façon classique dans la technique de l'échographie ultrasonore. No est la récurrence de sortie, choisie comme un sous multiple de Ni, soit :

$$No \ = \ \frac{Ni}{N}$$

relation dans laquelle N est le nombre d'impulsions d'émission (ou tirs) Pris en compte pour établir un profil de vitesse. La corrélation entre paires de signaux successifs est effectuée, et les N-M fonctions de corrélation sont moyennées comme déjà indiqué plus haut (M = 4 dans l'exemple considéré ici). Fso est la fréquence d'échantillonnage de sortie, les différents échantillons obtenus en sortie représentant les points de vitesse successifs du profil de vitesse recherché. Fso est un sous multiple de la fréquence d'échantillonnage d'entrée ; par exemple : Fso = Fsi/4 (voir la figure 3). Dans ces conditions, le signal Fsi assure la synchronisation à la fréquence d'échantillonnage d'entrée dans tous les éléments représentés à la figure 2, mis à part le multiplexeur 24 où la synchronisation s'effectue à la fréquence d'échantillonnage de sorite Fso, et mis à part le comparateur 23 qui n'appartient pas à la chaîne directe de traitement du signal d'information reçu en écho. La fourniture du signal Fsi aux éléments autres que 23 et 24 n'est pas représentée, figure 2, pour ne pas surcharger le dessin. Le signal Ni en entrée des filtres 13, 14, 15 symbolise la présence de retards multiples de 1/Ni (1/Ni = T) comme expliqué ci-dessous en référence aux figures 4a et 4b. Ce signal Ni qui figure aussi en entrée du dispositif de mesure de vitesses 11 symbolise dans ce dernier la présence de retards 1/Ni nécessaire au moyennage sur N-M corrélations successives comme déjà décrit. De façon connue la corrélation, en 11, s'effectue de préférence comme décrit dans la demande de brevet européen 0 225 667 (incorporée ici par référence). Il s'agit d'une corrélation 1 bit. Pour chaque échantillon de vitesse à déterminer $S'_l$ à partir de deux tirs consécutifs donnés (voir figure 3 du présent fascicule), on définit une fenêtre temporelle de largeur w qui regroupe un nombre prédéterminé constant d'échantillons d'entrée, par exemple 32, la corrélation étant effectuée bit à bit entre ces deux fenêtres qui sont décalées entre elles exactement de la durée T, c'est-à-dire qui se correspondent entre deux tirs consécutifs. Pour l'échantillon de vitesse suivant, les deux fenêtres des deux tirs considérés sont décalées d'un nombre prédéterminé de périodes d'échantillons d'entrée, par exemple 4, ce qui implique un important recouvrement d'une fenêtre à la suivante. Ceci est symbolisé par la fourniture du signal d'horloge Fso à l'estimateur de vitesse 11. Les détecteurs d'amplitude 16, 17, 18, le comparateur 23 et le multiplexeur 24 sont quant à eux synchronisés par le signal d'horloge Fso de façon que le séquencement du comparateur et par suite du multiplexeur s'effectue à une fréquence élevée qui est la même que la fréquence des échantillons de vitesse de sortie $S'_l$. Cette fréquence élevée permet, au moyen des opérations de corrélation, de moyennage et d'interpolation classiques qui suivent de s'affranchir de problèmes de discontinuités sur les profils de vitesses qui pourraient se manifester lors de la commutation du signal de sortie d'un filtre à un autre.

Chaque détecteur d'amplitude calcule l'énergie $AM(t_0)$ s'effectue pendant la durée d'une fenêtre selon la relation :

$$AM(t_0) \ = \ \sum_{t_0}^{t_0+w} \ D(t)$$

D(t) étant le signal de sortie du filtre considéré.

Le comparateur effectue en permanence la comparaison entre les signaux AM1, AM2, AM3 obtenus à la cadence Fso en sortie des détecteurs 16, 17, 18, fournit le signal de commande CO du multiplexeur et l'am-

plitude résultante $A_R(t_0)$ telle que :

$$A_R(t_0) = \text{Max}[AM1(t_0), AM2(t_0), AM3(t_0)]$$

Les deux signaux CO et $A_R$ sont échantillonnés à la fréquence de sortie Fso du dispositif ; ces deux signaux sont calculés à chaque période de récurrence de sortie 1/No du dispositif. Les trois détecteurs d'amplitude et le comparateur sont mis à l'état initial à chaque récurrence de sortie 1/NO. Le signal CO calculé à cette même cadence est fourni au multiplexeur à chaque période de récurrence d'entrée 1/Ni de façon que le multiplexage soit constant pendant le calcul du profil de vitesse. Le signal $A_R$ est utilisé de façon connue, dans le dispositif de mesure de vitesses 11, en association avec des circuits à seuils d'amplitude pour confirmer ou infirmer la validité des points de vitesse calculés, c'est-à-dire pour effectuer une opération de segmentation du profil de vitesses recherché. On notera que les retards apportés par les éléments de retard 19, 21, 22 doivent, chacun, être au moins égaux à la durée w de la fenêtre d'analyse cette durée étant aussi celle qui est nécessaire à l'estimation des amplitudes AM1, AM2, AM3. Ainsi les signaux $D^1j$, $D^2j$, $D^3j$ retardés sont rendus synchrones du signal de commande CO du multiplexeur 24.

La figure 4a représente sous forme théorique la structure de chacun des filtres F1, F2, F3, utilisés selon l'invention. La figure 4b illustre une réalisation pratique de ce filtre. Il s'agit d'un filtre éliminateur d'échos fixes à 4 coefficients $a_0$, $a_1$, $a_2$, $a_3$ (n = 4). On rappelle que les signaux réfléchis par une cible en mouvement vérifient, d'une période de récurrence d'entrée à la suivante :

$$S_{k+1}(t) = S_k(t - \tau),$$

$\tau$    étant le décalage temporel entre signaux successifs du mouvement de la cible :

$$\tau = \frac{2VT}{C}$$

V :    vitesse de la cible.

En notation complexe, on obtient :

$$S_{k+1} = S_k\, e^{-j\emptyset}$$

$$\emptyset = 4\Pi\, Nc\, VT/C$$

Le signal de sortie de chaque filtre s'exprime par :

$$Dj = \sum_{k=0}^{n} a_k S_k,$$

$$Dj = So \sum_{k=0}^{n} a_k\, e^{-jk\emptyset}$$

Comme le montre la structure classique des filtres représentés aux figures 4a et 4b. On démontre que les rapports signal sur bruit d'entrée et de sortie des filtres vérifient alors la relation :

$$SNR_O = \frac{\left| \sum_{k=0}^{n} a_k\, e^{-jk\emptyset} \right|}{\sqrt{\sum_{k=0}^{n} a_k^2}} \times SNR_I \qquad (4)$$

soit :

$$\frac{SNR_O}{SNR_I} = A(\emptyset) = \frac{\left| \sum_{k=0}^{n} a_k\, e^{-jk\emptyset} \right|}{\sqrt{\sum_{k=0}^{n} a_k^2}} \qquad (2)$$

Améliorer le rapport signal sur bruit entre l'entrée et la sortie de chaque filtre F1, F2, F3 s'obtient en rendant maximal le rapport $A(\emptyset)$, tout en respectant la condition d'élimination d'échos fixes :

6

$$\sum_{k=0}^{n} a_k = 0 \qquad\qquad (1)$$

D'autre part, pour obtenir une comparaison d'amplitude correcte entre les différents filtres recherchés, il convient de normer l'amplitude de sortie par la constante K :

$$\sqrt{\sum_{k=0}^{n} a_k^2} = K \qquad\qquad (3)$$

De manière équivalente, il suffit d'imposer la contrainte :

$$\sum_{k=0}^{n} a_k^2 = 1$$

Une autre contrainte que l'on se donne en plus de celles exprimées par les relations (1) et (3) consiste, pour la recherche des coefficients $a_k$ à s'imposer une dynamique sur ces coefficients, comme déjà décrit ci-dessus. Alors qu'il y aurait théoriquement un filtre différent à déterminer pour chaque point de vitesse du profil de vitesse à établir, ce qui s'avèrerait impraticable pour la conception du circuit, le respect des trois contraintes précitées conduit expérimentalement à des groupes de filtres dont les caractéristiques sont proches, pour chaque groupe, et il est possible de choisir pour chaque groupe un filtre particulier dont les coefficients s'expriment de façon simple, ce filtre particulier étant choisi pour couvrir une gamme de vitesses particulière. On est ainsi conduit à sélectionner trois filtres, dont la courbe de réponse combinée, en amplitude en fonction des vitesses est représentée en trait plein à la figure 5, pour une fréquence de récurrence d'entrée Ni de 5 kHz. Cette réponse combinée est constituée par les parties de courbe en trait plein qui se rejoignent deux à deux : RF1, RF2, RF3.

Le filtre F1, à front raide, est sélectionné par le multiplexeur 24 pour la mesure des vitesses les plus faibles (jusqu'à 16 cm/s) ; ses coefficients sont :

$$a_0 = 2/\sqrt{10}, a_1 = 1/\sqrt{10}, a_2 = -1/\sqrt{10}, a_3 = -2/\sqrt{10}$$

Le filtre F2 est sélectionné pour la mesure des vitesses comprises entre 16 cm/s et 25 cm/s ; ses coefficients sont :

$$a_0 = 1/2, a_1 = -1/2, a_2 = -1/2, a_3 = 1/2$$

Le filtre F3, sélectionné pour la mesure des vitesses supérieures à 25 cm/s, a comme coefficients :

$$a_0 = 1/2, a_1 = -1/2, a_2 = 1/2, a_3 = -1/2$$

Pour les trois filtres, on obtient (voir relation (3)) : K = 1.

On a aussi représenté, à la figure 5, pour un point de vitesse particulier, PV, la façon dont s'opère la sélection du filtre qui fournit en sortie le signal de plus grande amplitude, en l'occurrence AM2 fournie par le filtre F2. La réponse combinée des trois filtres RF1-RF2-RF3 pour l'élimination d'échos fixes peut être comparée à la courbe de réponse RF représentée en trait mixte à la figure 5. La courbe RF est la réponse d'un filtre éliminateur d'échos fixes classique, unique, à trois coefficients ($a_0 = 2$, $a_1 = -1$, $a_2 = -1$) qui n'est satisfaisant ni pour les vitesses faibles (absence d'un front raide), ni pour les vitesses élevées (amplitudes faibles).

Sur les figures 6a et 6b, on a représenté des profils de vitesse obtenus pour et au voisinage de l'artère poplitée, en 6a en utilisant un filtre classique unique à trois coefficients du type indiqué au paragraphe précédent et en 6b selon l'invention. Les abscisses représentent la profondeur PR en nombre de points, l'abscisse 400 correspondant à la profondeur 15 mm. Les parties de profils situées au voisinage de l'abscisse 280 rendent compte de l'écoulement sanguin dans l'artère poplitée et celle située au voisinage de l'abscisse 100, de l'écoulement sanguin dans une artériole. Le profil de vitesse de la figure 6b, qui ne présente pas de discontinuités, contrairement à celui de la figure 6a, est plus proche de la réalité physique des déplacements dans les milieux analysés, par rapport à ce dernier, et montre la supériorité du filtre de type F1 sur le filtre à réponse RF, dans la gamme des vitesses les plus faibles. Le dispositif selon l'invention permet aussi, de façon non représentée, de fournir des profils de vitesse convenables pour une gamme de vitesses variant de 0 à 30 cm/s et plus comme c'est le cas par exemple pour l'écoulement sanguin dans l'artère carotide.

**Revendications**

1. Dispositif éliminateur d'échos fixes pour échographe ultrasonore à émission d'impulsions récurrentes muni d'un circuit d'intercorrélation et d'interpolation, en vue de la détermination de profils de vitesse de milieux en mouvement, comportant au moins un filtre éliminateur d'échos fixes du type passe-bande à lignes à retard, caractérisé en ce qu'il comporte une pluralité de filtres éliminateurs d'échos fixes du type précité en parallèle, dont les bandes passantes sont juxtaposées, des détecteurs d'amplitude reliés chacun à la sortie de chacun desdits filtres et à l'entrée d'un comparateur, des éléments de retard branchés entre la sortie de chaque filtre et un multiplexeur, ce dernier recevant un signal de commande issu dudit comparateur pour sélectionner en sortie dudit multiplexeur celui parmi les signaux de sortie desdits filtres qui présente la plus grande amplitude.

2. Dispositif éliminateur d'échos fixes selon la revendication 1, caractérisé en ce que lesdits filtres éliminateurs d'échos fixes sont des filtres à 4 coefficients, à somme des coefficients nulle.

3. Dispositif éliminateur d'échos fixes selon la revendication 1 ou 2, caractérisé en ce que lesdits filtres éliminateurs d'échos fixes, dont la somme des n coefficients est nulle, soit :

$$\sum_{k=0}^{n} a_k = 0,$$

sont conçus et sélectionnés pour rendre maximale la fonction du rapport signal à bruit entre la sortie et l'entrée desdits filtres A(∅) :

$$A(\emptyset) = \frac{\left| \sum_{k=0}^{n} a_k \, e^{-jk\emptyset} \right|}{\sqrt{\sum_{k=0}^{n} a_k^2}}$$

avec :

$$\emptyset = 4\Pi \, N_c \, VT/C$$

où :

$N_c$ : fréquence du signal échographique pendant l'impulsion,
$V$ : vitesse du flux sanguin correspondant au filtre sélectionné,
$T$ : période de récurrence de l'impulsion de signal échographique,
$C$ : vitesse du son dans le milieu analysé,
la somme des carrés des coefficients étant normée :

$$\sum_{k=0}^{n} a_k^2 = 1$$

4. Dispositif éliminateur d'échos fixes selon la revendication 2 ou 3, caractérisé en ce qu'il comporte les trois filtres éliminateurs d'échos fixes à quatre coefficients suivants :
   - un filtre pour vitesses faibles : $a_0 = 2/\sqrt{10}$, $a_1 = 1/\sqrt{10}$, $a_2 = -1/\sqrt{10}$, $a_3 = -2/\sqrt{10}$,
   - un filtre pour vitesses moyennes : $a_0 = 1/2$, $a_1 = -1/2$, $a_2 = -1/2$, $a_3 = 1/2$,
   - un filtre pour vitesses élevées : $a_0 = 1/2$, $a_1 = -1/2$, $a_2 = 1/2$, $a_3 = -1/2$.

5. Echographe ultrasonore à émission d'impulsions comportant un dispositif éliminateur d'échos fixes selon l'une des revendications 1 à 4.

**Patentansprüche**

1. Vorrichtung zur Festecho-Unterdrückung für einen Ultraschall-Echographen mit Aussendung wiederkehrender Pulse, die mit einer Korrelations- und Interpolationsschaltung für die Bestimmung von Geschwindigkeitsprofilen von sich bewegenden Umgebungen versehen ist und wenigstens ein Festecho-Unterdrückungsfilter des Bandpaß-Typs mit Verzögerungsleitungen umfaßt, <u>dadurch gekennzeichnet</u>, daß sie mehrere parallel angeordnete Festecho-Unterdrückungsfilter der obengenannten Art umfaßt, deren Durchlaßbereiche nebeneinander liegen, daß Amplitudendetektoren jeweils mit dem Ausgang jedes der genannten Filter und dem Eingang eines Komparators verbunden sind und Verzögerungselemente zwischen den Ausgang jedes Filters und einen Multiplexer geschaltet sind, wobei letzterer ein aus dem genannten Komparator kommendes Befehlssignal empfängt, um am Ausgang des genannten Multiplexers dasjenige unter den Ausgangssignalen der genannten Filter zu selektieren, das die größte Amplitude aufweist.

2. Vorrichtung zur Festecho-Unterdrückung nach Anspruch 1, <u>dadurch gekennzeichnet</u>, daß die genannten Festecho-Unterdrückungsfilter Filter mit 4 Koeffizienten, deren Summe null beträgt, sind.

3. Vorrichtung zur Festecho-Unterdrückung nach Anspruch 1 oder 2, <u>dadurch gekennzeichnet</u>, daß die genannten Festecho-Unterdrückungsfilter, deren Summe der n Koeffizienten null beträgt, das heißt

$$\sum_{k=0}^{n} a_k = 0$$

so selektiert und entworfen werden, daß sie die Funktion A(∅) des Signal-Rausch-Verhältnisses zwischen Ausgang und Eingang der genannten Filter maximal werden lassen:

$$A(\varnothing) = \frac{\left| \sum_{k=0}^{n} a_k \ e^{-jk\varnothing} \right|}{\sqrt{\sum_{k=0}^{n} a_k^2}}$$

mit:
$$\varnothing = 4\pi N_c VT/C$$

wobei:
$N_c$: Frequenz des Echographiesignals während des Pulses,
V: dem selektierten Filter entsprechende Geschwindigkeit der Blutströmung,
T: Folgefrequenz des Echographiesignalpulses,
C: Geschwindigkeit des Schalls in der untersuchten Umgebung bedeuten und die Summe der Quadrate der Koeffizienten normiert ist als:

$$\sum_{k=0}^{n} a_k^2 = 1$$

4. Vorrichtung zur Festecho-Unterdrückung nach Anspruch 2 oder 3, <u>dadurch gekennzeichnet</u>, daß sie die drei folgenden Festecho-Unterdrückungsfilter mit 4 Koeffizienten umfaßt:
 - ein Filter für niedrige Geschwindigkeiten:
$$a_0 = 2/\sqrt{10}, \ a_1 = 1/\sqrt{10}, \ a_2 = -1/\sqrt{10}, \ a_3 = -2/\sqrt{10}$$
 - ein Filter für mittlere Geschwindigkeiten:
$$a_0 = 1/2, \ a_1 = -1/2, \ a_2 = -1/2, \ a_3 = 1/2$$
 - ein Filter für hohe Geschwindigkeiten:
$$a_0 = 1/2, \ a_1 = -1/2, \ a_2 = 1/2, \ a_3 = -1/2$$

5. Ultraschall-Echograph mit Aussendung von Pulsen, der eine Vorrichtung zur Festecho-Unterdrückung nach einem der Ansprüche 1 bis 4 umfaßt.

## Claims

1. A device for eliminating fixed echoes in an ultrasonic echograph with recurrent pulse emission, provided with an intercorrelation and interpolation circuit, with a view to determine velocity profiles of moving media, comprising at least one filter for eliminating fixed echoes of the passband type with delay lines, characterized in that it comprises a plurality of filters for eliminating fixed echoes of the described type which are connected in parallel and the passbands of which are juxtaposed, respective amplitude detectors being connected to the output of each of said filters and to the input of a comparator, delay elements being connected between the output of each filter and a multiplexer, the latter receiving a control signal issued by said comparator to select, at the output of the said multiplexer, that one among the output signals of said filters which has the highest amplitude.

2. A device for eliminating fixed echoes as claimed in Claim 1, characterized in that said filters for eliminating fixed echoes are filters having 4 coefficients, the sum of the coefficients being zero.

3. A device for eliminating fixed echoes as claimed in Claim 1 or 2, characterized in that said filters for eliminating fixed echoes for which the sum of the n coefficients is zero, so

$$\sum_{k=0}^{n} a_k = 0,$$

are designed and selected to maximize the function A($\phi$) of the signal-to-noise ratio between the output and the input of said filters:

$$A(\phi) = \frac{\left| \sum_{k=0}^{n} a_k \, e^{-jk\phi} \right|}{\sqrt{\sum_{k=0}^{n} a_k^{2}}}$$

with:

$$\phi = 4\pi \, N_c \, VT/C$$

in which:

$N_c$: frequency of the echographic signal during the pulse,

V: velocity of blood flow corresponding to the selected filter,

T: recurrence period of the echographic signal pulse,

C: velocity of sound in the analysed medium, the sum of the squares of the coefficients being normalized:

$$\sum_{k=0}^{n} a_k^{2} = 1$$

4. A device for eliminating fixed echoes as claimed in Claim 2 or 3, characterized in that it comprises the following three filters for eliminating fixed echoes with four coefficients:
   - a filter for low velocities: $a_0 = 2/\sqrt{10}$, $a_1 = 1/\sqrt{10}$, $a_2 = -1/\sqrt{10}$, $a_3 = -2/\sqrt{10}$,
   - a filter for mean velocities: $a_0 = 1/2$, $a_1 = -1/2$, $a_2 = -1/2$, $a_3 = 1/2$,
   - a filter for high velocities: $a_0 = 1/2$, $a_1 = 1/2$, $a_2 = 1/2$, $a_3 = -1/2$.

5. An ultrasonic echograph with pulse emission comprising a device for eliminating fixed echoes as claimed in any one of the Claims 1 to 4.

FIG.1

FIG.3

FIG.5

FIG.2

FIG.4a

FIG.4b

FIG.6a

FIG.6b